(19) Europäisches Patentamt

European Patent Office

Office européen des brevets

(11) **EP 0 654 658 B1**

(12) **EUROPÄISCHE PATENTSCHRIFT**

(45) Veröffentlichungstag und Bekanntmachung des Hinweises auf die Patenterteilung:
**28.01.1998 Patentblatt 1998/05**

(51) Int Cl.[6]: **G01M 17/02**

(21) Anmeldenummer: **94118232.1**

(22) Anmeldetag: **18.11.1994**

(54) **Verfahren und Vorrichtung zur Rundlaufkorrektur von Luftreifen**

Eccentricity correction procedure and device for tyres

Procédé et appareil de correction de l'excentricité de pneus

(84) Benannte Vertragsstaaten:
**DE ES FR GB IT LU**

(30) Priorität: **23.11.1993 DE 4339775**

(43) Veröffentlichungstag der Anmeldung:
**24.05.1995 Patentblatt 1995/21**

(73) Patentinhaber: **Continental Aktiengesellschaft 30165 Hannover (DE)**

(72) Erfinder:
- **Buschmann, Erich
  D-34497 Korbach (DE)**
- **Bangert, Heinz-Albert
  D-34497 Korbach (DE)**
- **Evertz, Karl-Heinz
  D-52134 Herzogenrath (DE)**
- **Kleinhoff, Klaus
  D-31552 Rodenberg (DE)**
- **Thomas, Dr. Manfred
  D-34497 Korbach (DE)**

(56) Entgegenhaltungen:
**DE-A- 1 944 678          DE-A- 2 715 111
US-A- 3 862 570**

- **PATENT ABSTRACTS OF JAPAN vol. 011 no. 021 (M-555) ,21.Januar 1987 & JP-A-61 195809 (BRIDGESTONE CORP;OTHERS: 01) 30.August 1986.**

**Beschreibung**

Die Erfindung bezieht sich auf ein Verfahren und Vorrichtung zur Rundlaufkorrektur von Luftreifen, vorzugsweise schlauchlosen mit radialer Karkasse für PKW mit 5°-Felgen, wobei jeder Reifen zunächst auf eine Meisterfelge montiert wird, die abgesehen von ihrer besonders hohen Präzision den für den betreffenden Reifen vorgesehenen serienmäßigen Felgen entspricht, der Reifen danach aufgeblasen wird auf einen Luftdruck in dem Intervall von -0,3 bar bis +0,2 bar um den vorgesehenen maximalen Betriebsluftdruck herum, wonach das im wesentlichen aus Meisterfelge und zu korrigierendem Reifen bestehende Rad gegen eine Meßvorrichtung gedrückt wird, zum Beispiel gegen eine trommelförmige Kraftmeßvorrichtung, und zumindest eine radiale Größe gemessen und - vorzugsweise elektronisch - in Abhängigkeit vom Raddrehwinkel, der das volle Intervall von 0° bis 360° durchläuft, aufgezeichnet wird, sodann das Minimum und das Maximum bestimmt wird, danach die Differenz zwischen beiden Extrema, also die maximale Kraft- bzw. Radiusschwankung bestimmt wird, die sodann mit dem zu gelassenen Toleranzwert verglichen wird, wonach die Reifen, deren maximale Schwankung über dem zugelassenen Tolernazwert liegen einer Korrektur im Wulstbereich unterzogen werden.

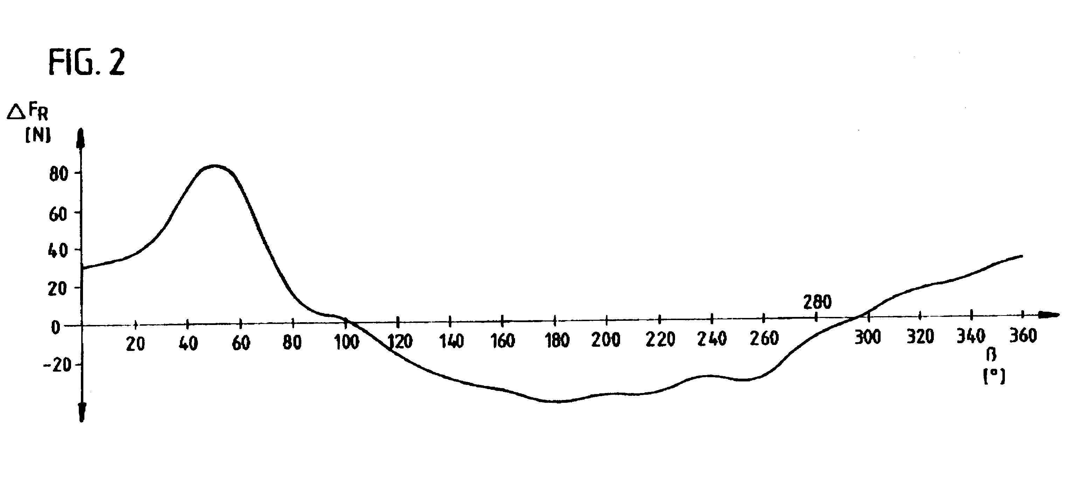

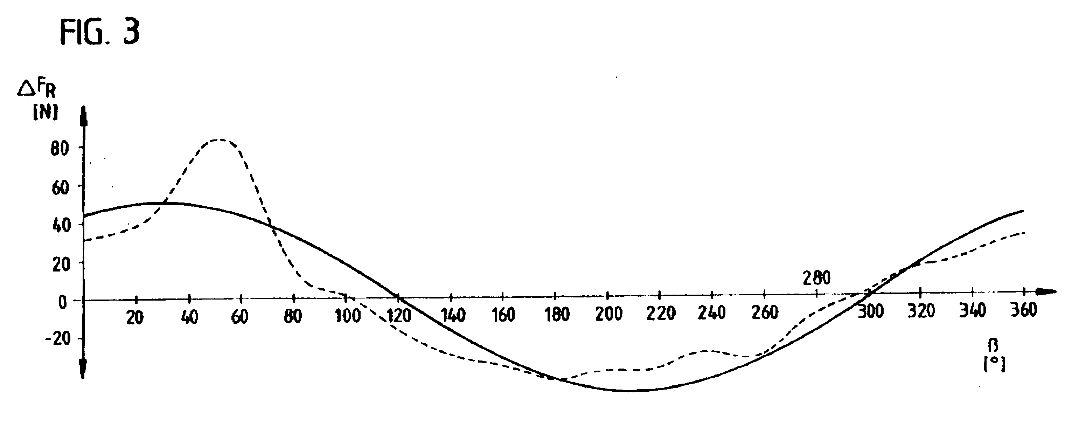

Bekannter Stand der Technik zu diesem Fachgebiet ist in der DE-OS 27 15 111 beschrieben. Dem dort beschriebenen Verfahren geht es um die Verminderung der von den Reifen herrührenden Unwuchten, insbesondere der dynamischen Unwucht. Dazu wird auf den axial inneren Seiten des Reifenwulstes zur Trimmung zusätzliches Gummi angebracht (siehe dortige Figuren 2 und 3) oder an den gegenüberliegenden Stellen entfernt.

Da es nicht erforderlich ist, Reifen und Felge jeweils für sich auszuwuchten, es vielmehr ausreicht, den Verband beider Teile zusammen mit den übrigen zum Rad gehörenden Bauteilen, insbesondere dem Ventil und ggf. der Bremsscheibe bzw. der Bremstrommel auszuwuchten und überdies die Befestigung der Trimmgewichte an der Felge leichter, insbesondere ohne erneute Reifendemontage nach der Radvermessung, zu realisieren ist, hat sich diese Technik nicht durchgesetzt. Im übrigen stammen die im Fahrzeuginneren wahrnehmbaren Fahrwerksschwingungen auf ebener Fahrbahn nicht nur aus ungleichförmiger Massenverteilung, die allein durch Auswuchten kompensiert werden kann, sondern darüber hinaus aus Steifigkeits- und Radiusschwankungen.

Nachfolgend wird davon ausgegangen, daß entsprechend gängiger Technik die Masseverteilung eines Rades durch richtige Anordnung von Trimmgewichten an der Felge hinreichend gleichmäßig ist, wonach die Aufgabe zurückbleibt, die dennoch verbleibenden Kraftschwankungen, insbesondere der Radialkraft, auf ein toleriertes Maß zu vermindern. Die Größe dieser Toleranzmaße wird im wesentlichen von den Kunden bestimmt und hängt im wesentlichen ab von der Komforterwartung in der jeweiligen Fahrzeugklasse, dem Verhältnis zwischen den gefederten und ungefederten Massen, der maximal zugelassenen bzw. möglichen Geschwindigkeit und schließlich der Bereitschaft, einen höheren Preis für besseren Rundlauf zu bezahlen; bei einer üblichen Radaufstandskraft von etwa 3.150 Newton an der höher belasteten Achse aktueller Mittelklasse-PKW wird in der deutschen Erstausrüstung üblicherweise eine maximale Schwankung der Radialkraft (= Maximum - Minimum) über dem Umfang von etwa 100 Newton toleriert, was etwa +/- 1,6% entspricht.

Da nicht alle Reifen nach ihrer Vulkanisation solche Rundlaufanforderungen erfüllen, ist es bekannt, die außerhalb des Toleranzfeldes liegenden Reifen nach der Vulkanisation zu korrigieren; in der deutschen Reifenfachsprache wird dieser Vorgang auch als "Harmonisieren" bezeichnet. Das übliche Harmonisierungsverfahren besteht darin, die Lauffläche zu beschleifen. Dieses Verfahren nimmt in Kauf, daß die Profiltiefe örtlich verringert wird; dies kann nur in sehr engen Grenzen zugelassen werden, üblicherweise bis zu 0,5 mm.

Das europäische Patent 0 405 297 lehrt für Reifen, die auf 5°-Felgen montiert werden sollen, ein anderes Harmonisierungs-Verfahren. 5°-Felgen sind üblich an allen PKW und leichten Nutzfahrzeugen wie Ford Transit, VW-Transporter, Renault Traffic etc.. Danach soll zwischen den im wesentlichen senkrecht zur Reifenachse stehenden Felgenhörnern und der entsprechenden Wulstfläche eine Unterlegscheibe angeordnet werden, deren Dicke (= Axialmaß) proportional zu dem zu kompensierenden Fehler ist, wobei an Stellen, wo die gemessene Radialkraft größer als die über dem Umfang gemittelte ist, die Unterlegscheibe besonders dick ist und an den Stellen, wo die tatsächliche Radialkraft kleiner als die gemittelte ist, die Unterlegscheibe besonders dünn ist. Mit dieser Kompensations-Maßnahme ist zwar tatsächlich eine Verminderung des Spitze/Spitze-Wertes des Radialkraftschriebes über dem Umfang zu erwarten, jedoch findet der Reifenwulst seine Lage auf der Felge dadurch grundsätzlich weiter axial innen, wo der Felgendurchmesser kleiner ist, sodaß die Pressung zwischen der radial inneren Wulstfläche, insbesondere auch der Dichtungszehe, und der Felgensitzfläche vermindert ist. Hierdurch wird die Abwerfsicherheit beeinträchtigt; selbst an den Stellen, wo sich die Radialkraft schon ohne Korrektur im Toleranzband befindet, muß der Reifenwulst nach axial innen verschoben werden, weil die Unterlegscheibe aus Gründen der Festigkeit und des Handlings auch dort eine Mindeststärke haben muß.

Weiterhin führt die nach radial innen hin weiter nach axial innen hin gezogene Reifenseitenwand zu dem von Felgen verkleinerter Maulweite her bekannten Effekt verschlechterten Kantensteigvermögens, was insbesondere an überwiegend im Stadtverkehr eingesetzten Fahrzeugen Probleme erwarten läßt. Dabei ergeben sich auch eher Beschädigungen der Felgenhörner durch Berührungen mit Bordsteinkanten.

Im übrigen ist es grundsätzlich unerwünscht, die Anzahl der zu fügenden Bauteile zu erhöhen, weil dies die Wahrscheinlichkeit von Fehlmontagen erhöht und damit schlimmstenfalls den zu kompensierenden Fehler sogar noch vergrößert.

Die gleiche Patentschrift lehrt überdies für 15°-Felgen, die üblicherweise an mittelschweren und schweren LKW eingesetzt werden, ebenfalls eine über dem Umfang in der Dicke an den Radialkraftschrieb anzupassende Unterlegscheibe zwischen Felge und Reifenwulst, jedoch nicht zwischen Felgenhorn und Wulstfläche sondern zwischen der um 15° geneigten radial inneren Sitzfläche der Felge und entsprechender Wulstfläche. Deren Dicke (=Radialmaß) soll proportional zu dem zu kompensierenden Fehler sein, wobei an den Stellen, wo die örtliche Radialkraft größer als die über dem Umfang gemittelte ist, die Unterlegscheibe besonders dünn sein soll und an den Stellen, wo die tatsächliche Radialkraft kleiner als die gemittelte ist, die Unterlegscheibe besonders dick sein soll.

Dieses Verfahren, welches einen verkleinerten Sitzflächendurchmesser der Felgen bei Verwendung üblicher Reifen oder einen vergrößerten Wulstdurchmesser der Reifen bei Verwendung üblicher Felgen erfordert, um genügend radialen Bauraum für die kompensierende Unterlegscheibe bereit zu stellen, erhöht nicht nur die Teileanzahl pro Rad sondern überdies die Teilevielfalt pro Fahrzeugtyp. Dies ist kaum durchsetzbar.

Aufgabe der Erfindung ist es, ein Korrekturverfahren zur Minderung mindestens der Radialkraftschwankung von Fahrzeugluftreifen anzugeben, welches keine zusätzlichen Teile am Rad erfordert und überdies auch nicht die Teilevielfalt erhöht. Ferner sollen alle Beeinträchtigungen der übrigen Reifeneigenschaften ausgeschlossen sein, insbesondere die Kantensteigfähigkeit und der Felgenhornschutz unbeeinflußt sein.

Die Aufgabe wird erfindungsgemäß dadurch gelöst, daß an den Stellen, wo die örtliche Radialkraft bzw. der örtliche Reifenradius größer als Minimum plus der maximalen Toleranz ist, zumindest soviel von der nach radial innen weisenden Sitzfläche des Reifenwulstes abgetragen wird, daß danach die verbleibenden Schwankungen innerhalb des Toleranzfeldes liegen. Wo nicht die Radialkraftschwankung selbst das Abnahmekriterium ist sondern Harmonische derselben - meistens wird eine Toleranz für die erste Harmonische angegeben - ist natürlich an der Stelle und ihrer Umgebung, wo die größte Radialkraftschwankung vorliegt, soviel abzutragen, daß die Amplitude der besagten Harmonischen bis auf den tolerierten Wert vermindert wird.

Das Abtragen kann durch Schleifen erfolgen. Dies ist besonders preiswert und es können die gleichen Werkzeuge eingesetzt werden, wie sie vom Beschleifen der Lauffläche her bekannt sind. Als ähnliches Abtragverfahren ist auch ein Abschälen möglich, wobei bei gleichem Spanvolumen weniger aber größere Späne entstehen. Die die erreichbare Präzision begrenzende Reaktionskraft in radialer Richtung vom Schälwerkzeug auf den zu bearbeitenden Wulst ist dennoch nicht größer als beim Schleifen, weil der Schnittwinkel beim Schälwerkzeug spitzer gewählt werden kann als dies bei einem Schleifwerkzeug möglich ist. In der Oberflächenbeschaffenheit, die sich bei beiden verschiedenen Verfahren ergibt, zeigen sich kaum Unterschiede.

Zwar gibt es noch Unterschiede zwischen beiden Varianten in Bezug auf die Umweltbelastung und zwar hat das Schleifen den Vorteil, daß das entstehende Gummimehl leichter Kautschukmischungen zugesetzt werden kann, dafür aber den Nachteil, daß eine höhere Staubbelastung am Arbeitsplatz entsteht, indessen sind diese Unterschiede für die erfindungsgemäße Rundlaufkorrektur unwesentlich. Das Abschälen wird deshalb im Rahmen dieser Anmeldung als äquivalentes Abtragverfahren zum gängigeren Abschleifen betrachtet.

Eine besonders feine Variante des erfindungsgemäßen Verfahrens ist dadurch gekennzeichnet, daß das Abtragen durch Laserstrahl erfolgt. Hierbei hat das zu bearbeitende Werkstück nämlich nicht die Tendenz, dem Werkzeug auszuweichen. Zudem ist dieses Abtragverfahren frei von Werkzeugverschleiß, erfordert aber bislang aufgrund der geringen Wirkungsgrade der verfügbaren Laser einen höheren Energieeinsatz. Von den gängigen Lasern scheint am ehesten die $CO_2$-Type in Frage zu kommen. Die entstehenden Abfallstoffe, insbesondere das Abgas, sind noch nicht ganz erforscht.

Der Kern der Erfindung ist also der, daß nicht an den fertig vulkanisierten Reifen nachträglich etwas angefügt wird, sondern daß von ihm ausschließlich etwas abgetragen wird und zwar von der radial inneren Wulstfläche. Dabei muß die Gummiumkleidung des Wulstes um ein Mindestmaß dicker sein als der maximal zugelassene Abtrag; dieses Mindestmaß hängt von der zu erwartenden Belastung ab und beträgt bei den meisten PKW-Reifen 0,6 mm, bei LKW-Reifen mehr. Das stehen bleibende Mindestmaß schützt den Karkaßumbuck vor Anscheuerungen und Feuchtigkeitseinwirkung bei Transport, Lagerhaltung und Montage. Die bislang üblichen Umkleidungsdicken liegen über dem erforderlichen Mindestbetrag, sodaß die Differenz zwischen tatsächlicher Umkleidungsdicke und Mindestumkleidungsdicke als maximaler Abtrag zugelassen werden kann.

Natürlich ändert der erfindungsgemäße Abtrag die sogenannte "Wulstkennung", unter der die sich einstellende Flächenpressung als Funktion vom tatsächlichen Felgensitzumfang verstanden wird. Bei einem maximalen Abtrag von 0,5 mm und einem Winkelbereich des Abtrages von 90°, wobei der Abtrag an den Winkelbereichsgrenzen sprungfrei (=stetig), vorzugsweise stetig differenzierbar, mit hinreichend kleiner Steigung ansteigt, um die Reifen-Felgen-Dichtung nicht zu gefährden, wächst der über dem Umfang gemittelte Wulstdurchmesser nur um 0,15 mm. Dementsprechend liegt die Kennlinie nach dem Abtrag bei dem (weit links vom eigentlich betrachteten Toleranzfeld liegenden) Punkt, wo Felgensitz- und Wulstumfang übereinstimmen (Pressung 0) um 0,15 mm nach rechts verschoben und damit also tiefer. Allerdings ist die Steigung der Kennlinie deutlich (um ca. 20 %) größer, wodurch innerhalb des Toleranzfeldes der Pressungsabfall zum Teil kompensiert ist. Bei vielen Reifentypen ist der verbleibende Pressungsabfall bzw. die Verschiebung des Sitztoleranzfeldes so gering, daß sie im Vergleich zu den übrigen Einflüssen untergeht.

Bei einer besonders guten Ausführung der Erfindung wird die Gummiumkleidung des Wulstes - schon am Rohling - etwas dicker, beispielsweise um 0,15 mm, als bislang üblich ausgeführt. In vorgenanntem Beispiel würde sich damit nach dem erfindungsgemäßen Abtrag genau die gleiche Wulstkennung ergeben, die die Reifentype zuvor für am Wulst ungeschliffene Reifen zeigte, freilich unter Inkaufnahme einer geringfügig strammeren Kennung an den Reifen, die gar nicht harmonisiert werden.

Überdies kann nach Steigerung der Umkleidungsdicke - z. Bsp. von 0,95 mm auf 1,10 mm - der maximal zulässige Abtrag von 0,35 mm auf 0,50 mm gesteigert werden. Es kann weiterhin zweckmäßig sein, an durch Wulstabtrag zu harmonisierenden Reifen den Wulstkerndurchmesser geringfügig zu vergrößern.

Geht man von einem Reifen nach dem Stand der Technik aus, der im Laufflächenbereich harmonisierbar ist, und bezeichnet den Zuwachs in der Dicke der Gummiumkleidung mit X, das Verhältnis des Winkelbereiches, in dem abgetragen wird, zum Vollwinkel als Y (im obigen Beispiel: Y=0,25) so liegt der optimale Zuwachs beim Wulstkerndurchmesser etwa bei XY, im obigen Beispiel also bei 0,04 mm. Der dadurch bedingte Gewichtszuwachs ist vernachlässigbar und um Größenordnungen kleiner als die Gewichtsersparnis, die die Erfindung im Laufflächenbereich ermöglicht; schließlich braucht jetzt die Lauffläche nicht mehr um das Harmonisierungsmaß dicker zu sein, das für die Erreichung der vom Kunden geforderten Mindestprofiltiefe erforderlich ist.

Indessen deuten die ersten durchgeführten Versuche darauf hin, daß an den meisten Reifentypen genügend "Fleisch" ist, um in erfindungsgemäßer Weise etwas vom Wulst abtragen zu können ohne den bzw. die Karkaßumbucke zu verletzen und ohne die Wulstsitzpressung unzulässig zu mindern.

Neben der Frage, an welchem Bauteil (radial innere Seite des Wulstes) mit welcher Maßnahme (Abtrag) eingegriffen wird ist für den Erfolg entscheidend, eine treffende (mathematische) Funktion der Größe der Maßnahme in Abhängigkeit vom Drehwinkel zu finden. Der erste Schritt zum Auffinden einer solchen Funktion, nachfolgend kurz Abtragfunktion genannt, ist wie im Stand der Technik an sich bekannt, die Messung der zu kompensierenden Fehler.

Während die bereits genannte DE-OS 27 15 111 die Reifenvermessung bei hoher Umfangsgeschwindigkeit - etwa entsprechend dem üblichen Autobahntempo - durchführen will, bleibt das europäische Patent 0 405 297 offenbar bei der üblichen quasi-statischen Vermessung, also einer Vermessung, wo die Massenkräfte praktisch keine Rolle spielen.

Die vorliegende Erfindung ist nicht auf eine niedrige Meßgeschwindigkeit angewiesen, da hier die Fehlerfunktion nicht graphisch - wie bei der EP-PS 0 405 297 - aufgezeichnet werden muß; vorzugsweise wird elektronisch aufgezeichnet.

Die elektronische Aufzeichnung hat überdies den Vorteil, daß mehrere aufeinanderfolgende Perioden (360°) gemittelt werden können, das heißt, daß der Fehlerwert bei X° mit dem bei (X+360)°, bei (X+2x360)°, bei (X+3x360)° und so weiter bis zum Fehler bei(X+$\mu$x360)° zusammengezählt und anschließend durch ($\mu$+1) dividiert wird, wobei X den Winkelbereich zwischen 0° und 360° durchläuft und $\mu$ eine natürliche Zahl ist, wodurch zufällige Meßfehler weitgehend unterdrückt werden.

Die Erfindung läßt auch alle Varianten bezüglich der Frage zu, was gemessen wird; es ist möglich, den Reifenradius oder Laufflächenradius mit seiner Schwankung zu messen. Wenn dieser Radius gemessen wird, geschieht dies üblicherweise im Zenit.

Oft schwankt der Laufflächenradius nicht nur über dem Umfang (also über dem Drehwinkel) sondern auch über der Axialen. Auch solche Fehler lassen sich beeinflussen, indem man den Laufflächenradius in einem gewissen axialen Abstand zu beiden des Zenites mißt, vorzugsweise in zwei Spuren und zwar einer etwa über dem linken Reifenwulst (wo letzterer sich im auf die Felge montierten Zustand befinden soll) und einer etwa über dem rechten Reifenwulst. Auf diese Weise wird auch eine eventuelle Reifenkonizität samt ihrer Schwankungen erfaßt. Die Positionierung der Meßorgane über den Wulstkernen hat den Vorteil, daß ohne Datenüberblendung zwischen den Daten der linken und den der rechten Meßspur die erforderlichen Abträge am linken bzw. rechten Wulst zu bestimmen sind. Weicht jedoch der Meßspurabstand deutlich ab vom Abstand von Wulstkernmitte zu Wulstkernmitte auf vorgesehener Felge, so ist eine Datenüberblendung erforderlich, die nachfolgend erläutert wird:

Es sei A der Abstand von Wulstkernmitte zu Wulstkernmitte und M der Abstand von Meßspurmitte zu Meßspurmitte, wobei sowohl die Wulstkerne als auch die Meßspuren symmetrisch zur Reifenmitte liegen. $R_1$ sei der in linker Spur gemessene Radius und $R_r$ der in rechter Spur gemessene. $R_{min}$ sei das Minimum der beiden für die linke und die rechte Spur ermittelten minimalen Radien. Y sei das Verhältnis der Radialerstreckung der unter den Wulstkernen befindlichen Materialien im unkomprimierten Zustand zum komprimierten Zustand (=Montagezustand); Y liegt für die meisten Reifen im Bereich zwischen 1,2 und 1,4. Das erforderliche Abtragmaß für vollständigen Fehlerausgleich im Laufflächenradius heiße über dem linken Wulst $D_1$ und über

dem rechten $D_r$. Unter der Voraussetzung einer über der Axialen in etwa gleichmäßigen Pressungsverteilung gilt dann:

$$D_l = Y \times \left( \frac{R_l + R_r}{2} + \frac{R_l - R_r}{2} \times \frac{A}{M} - R_{min} \right)$$

$$D_r = Y \times \left( \frac{R_l + R_r}{2} - \frac{R_l - R_r}{2} \times \frac{A}{M} - R_{min} \right)$$

was äquivalent ist zu

$$D_l = Y \times \left( R_l \frac{1 + \frac{A}{M}}{2} + R_r \frac{1 - \frac{A}{M}}{2} - R_{min} \right)$$

$$D_r = Y \times \left( R_l \frac{1 - \frac{A}{M}}{2} + R_r \frac{1 + \frac{A}{M}}{2} - R_{min} \right)$$

Bei A/M etwa 1 beeinflussen also die Meßergebnisse der linken Spur im wesentlichen allein den Abtrag am linken Wulst und die Meßergebnisse der rechten Spur den Abtrag am rechten Wulst.

Die Radienvermessung hat den Vorteil, daß sie besonders gut reproduzierbar ist, mit einem geringen Leistungsbedarf auskommt und eine relativ leichte Zuordnung der erforderlichen Abträge zu den gemessenen Fehlern erlaubt einschließlich der Konizität. Bei der bevorzugten quasistatischen Messung hängen die im Fahrzeuginneren als Vibration spürbaren Radialkraftschwankungen über die Radialfedersteifigkeit des Reifens (und auch der Felgen) mit den Radiusschwankungen zusammen.

Häufig sind aber Radschwingungen nicht nur durch reine Radiusschwankungen sondern auch durch Steifigkeitsschwankungen verursacht, die eine Radienvermessung nicht aufzeigt. Hier liegt der Vorteil der an sich bekannten Radialkraftmessung.

Im einfachsten Falle erfolgt die Radialkraftmessung durch Aufdrücken einer meistens aus Stahl bestehenden, eventuell - für diese Art Messung aber nicht bevorzugt - mit einem Asphaltbelag zur besseren Simulation der Fahrbahnbeschaffenheit beschichteten, Referenztrommel gegen das Rad mit dem zu vermessenden Reifen und es wird die Radialkraft am Rad oder der Referenztrommel erfaßt.

Höhere Meßgeschwindigkeiten werden möglich, wenn die Meßdaten noch ein Programm zur rechnerischen Elemination der Trägheitseinflüsse durchläuft.

Mit einem solchen Meßaufbau wird aber noch nicht die eventuell bestehende und in der Regel dann ebenfalls über dem Umfang schwankende Konizität des Reifens erfaßt, was aber vorzugsweise geschehen sollte. Zur Erfassung der Konizität bieten sich bei einer Radialkraftmessung insbesondere drei Möglichkeiten an:

Erstens könnte analog zu dem bereits bei der Radienvermessung in zwei Spuren Geschriebenen die Radialkraft gleichzeitig in zwei nebeneinander liegenden Spuren gemessen werden, wobei eine Spur links und eine rechts der Reifenmittelebene zu liegen hat. Dabei werden die Meßerbenisse der linken Meßspur in erster Linie das Abtragmaß am linken Wulst und die Meßergebnisse der rechten Spur das Abtragmaß am rechten Wulst bestimmen; dabei wird vorzugsweise - damit die Referenzrollen beider Meßspuren in ihrer Axialerstreckung zusammengenommen nahezu die gesamte Laufflächenbreite abdecken - der Abstand zwischen den Meßspurmitten kleiner sein als der Wulstabstand, nämlich knapp die halbe Laufflächenbreite, sodaß eine Datenüberblendung erforderlich sein wird, wie sie bei der Radienvermessung bereits ausführlich erläutert wurde. Eine solche Datenverarbeitung bereitet keine Probleme.

Zweitens könnten auch bei einer durchgehenden, axial also ungeteilten, Referenzrolle die Lagerreaktionskräfte getrennt erfaßt werden. Befindet sich das linke Lager der Referenzrolle in der Axialebene des linken Reifenwulstes und entsprechend das rechte Lager der Referenzrolle in der Axialebene des rechten Wulstes, dann hat der linke Kraftdatensatz Einfluß auf den Abtrag am linken und der rechte auf den Abtrag am rechten Wulst zu nehmen. Weicht der Axialabstand der Lager vom Wulstabstand ab, so ist analog dem bei der Radienvermessung Erklärten eine Datenüberblendung zwischen rechter und linker Seite durchzuführen.

Drittens kann die Konizität - was die Erfinder bereits erfolgreich getestet haben - dadurch erfaßt werden, daß neben der Radialkraft außerdem die Axialkraft mit ihrer Schwankung gemessen wird. Der zu vermessende Reifen hat sowohl auf der Fahrbahn als auch auf der zylinderförmigen Referenzrolle die Eigenschaft, zu der Seite hin zu rollen, wo sein Radius kleiner ist.

Vorzugsweise wird auch bei umgekehrter Drehorientierung mit gleichem Geschwindigkeitsbetrag gemessen und als konizitäts bedingte Axialkraft das arithmetische Mittel beider Messungen herangezogen. So kann die konizitätsbedingte Axialkraft - die durch erfindungsgemäßes Wulstschleifen korrigierbar ist ohne einen drehsinnfreien Reifen zu einem drehsinngebundenen zu machen - von den Axialkräften anderer Ursache, zum Beispiel schräger Querrillen, deren Orientierung sich bei Drehsinnwechsel umdreht, unterschieden werden; allerdings spielen die nicht-konizitätsbedingten Axialkräfte bei den meisten Reifentypen nur eine untergeordnete Rolle.

Während des Abtragens vom Wulst kann der Reifen nicht auf einer vollständigen Felge montiert sein, weil dann der Wulst nicht zugänglich wäre; deswegen wurde bisher nicht der Wulst sondern immer die Lauffläche als zu beschleifendes genommen.

Auch die EP-PS 0 405 297 gibt keine Anregung dafür, wie ein Abtrag im Wulstbereich möglich sein sollte bei gleichzeitiger Festspannung des Wulstes, vielmehr wird statt der Lösung eine Umgehung dieses Problemes angegeben, indem nämlich gar nichts vom Wulst abgetragen sondern etwas hinzugefügt wird.

Vorzugsweise wird der Reifen nach seiner Vermessung auf der Meisterfelge und Ermittlung des zu bearbeitenden Wulstbereiches - das kann am linken Wulst ein anderer sein als am rechten - von der Meisterfelge heruntergenommen und auf einer Einspannvorrichtung fixiert, die zwischen 200° und 310° des jeweiligen Wulstes nach Art einer Felge aufnimmt, um in dem freibleibendem Winkelbereich - 160° bis 50° - die zuvor bestimmte Menge vom Wulst abzutragen. Es ist möglich, wenngleich aufwendiger, nach dem ersten Abtrag den Reifen gegenüber der Einspannvorrichtung weiter zu drehen und in erneuter Festspannung an anderer Stelle vom Wulst abzutragen. Unter Beschränkung auf das Wichtigste, nämlich die Minderung oder Elimination der 1. Harmonischen, wird aber das Harmonisieren in einer Einspannung bevorzugt.

Zweckmäßigerweise wird während des Abtragens der Reifenwulst von seiner Innenseite her durch entsprechende Klemmbacken gegen die felgenfragmentähnliche Zentriervorrichtung gedrückt.

Ein freibleibender Winkelbereich von etwa 90° hat sich in praktischen Versuchen an PKW-Reifen bewährt; wo der Wulstkern im Verhältnis zur Umfangslänge in radialer Ebene biegesteifer ist, zum Beispiel bei LKW-Reifen, kann ein größerer Bereich, wo der Wulstkern weicher ist, zum Beispiel bei Motorradreifen, kann ein kleinerer Bereich zur Bearbeitung frei gehalten werden. Der bearbeitbare Freiraum wird größer, wenn die Rückwirkung des Abtragwerkzeuges kleiner ist; hier liegt der Vorteil des bereits erwähnten Abtrages durch einen Laserstrahl.

Die Erfindung wird nachfolgend anhand von 6 Figuren näher erläutert. Es zeigt

Fig. 1    einen Meßaufbau zur Beschreibung des Rundlaufes, hier zur Erfassung der Radialkraftschwankung,

Fig. 2    einen Radialkraftschwankungsschrieb eines PKW-Reifens vor erfindungsgemäßem Abtrag vom Wulst,

Fig. 3    die 1. Harmonische dazu,

Fig. 4    die Abtragsfunktion,

Fig. 5    schematisch im Querschnitt das abtragende Werkzeug und die Festspannvorrichtung in einer Ebene quer zum Reifen und

Fig. 6    analog Figur 3 die Auswirkung des erfindungsgemäßen Abtrages im Radialkraftschwankungsschrieb des fertig harmonisierten Reifens.

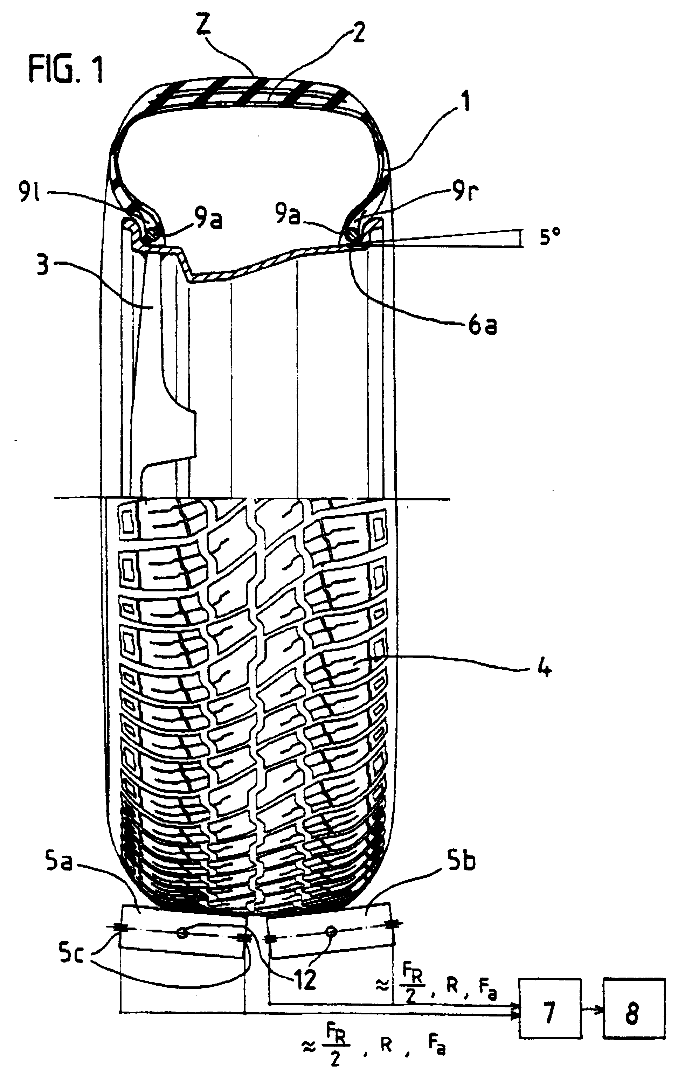

Figur 1 zeigt in der oberen Bildhälfte im Querschnitt und in der unteren Bildhälfte in Ansicht einen schlauchlosen PKW-Luftreifen 1 mit radialer Karkasse 2 auf einer Meisterfelge 3 mit um 5° zur axialen geneigten radial innerer Sitzfläche 6a. Der Reifen ist auf 2,0 bar aufgepumpt. Das diese Bauteile umfassende Rad ist mit dem Bezugszeichen 4 angesprochen. Das Rad 4 ist nach unten, gegen eine aus zwei zu beiden Seiten des Reifenzenites Z angeordnete Trommeln 5a und 5b bestehende Meßvorrichtung 5 gedrückt; bei geringer Anpreßkraft würde der jeweilige Laufflächenradius R gemessen; die Vorrichtung erlaubt aber auch die - bevorzugte - Messung der Radialkraftschwankung, wozu das Rad mit der vorgesehenen zeitlich gemittelten Radlast gegen die Meßtrommeln 5a und 5b gedrückt wird. An den Lagerstellen 5c und 5d der beiden Meßtrommeln 5a und 5b wird jeweils zumindest die Radialkraft $F_R$ und ggf. auch noch die Axialkraft $F_a$ gemessen und auf einem digitalen Datenrecorder 7 gespeichert, der mit einem Rechner 8 zusammenwirkt. In dem Rechner wird die Radialkraft $F_R$ über einer Periodenlänge (=Vollwinkel) aufintegriert, durch die Periodenlänge geteilt und dadurch die mittlere Radialkraft bestimmt. Die örtliche Radialkraftschwankung $^\wedge F_R$ ist die Differenz der örtlichen Radialkraft $F_R$ minus der mittleren Radialkraft.

Die Meßtrommeln 5a, 5b sind in der Querebene um Gelenke 12 schwenkbar gelagert, sodaß sich der Meßaufbau unterschiedlichen Reifenquerwölbungen anpassen kann. Darüberhinaus können die Meßtrommeln statt zylindrischer Form - wie dargestellt - sich auch nach innen hin etwas verjüngen zwecks besserer Schmiegung an Reiofenoberflächen.

In diesem Ausführungsbeispiel befinden sich die Mitten der Meßtrommeln 5a, 5b axial innerhalb der beiden Wülste 9l und 9r, sodaß eine Datenüberblendung zwischen beiden Meßspuren nötig ist. Diese Datenverarbeitung leistet ein Rechner 8.

Dieser kann sowohl vor als auch - wie bevorzugt und hier dargestellt - hinter dem elektronischen Datenaufzeichnungsgerät 7 angeordnet sein.

In solchen Varianten, wo nur eine Meßtrommel 5 verwendet wird, ist diese eine etwa mit der vollen Radlast gegen das zu vermessende Rad 4 zu drücken.

Vorzugsweise wird die Funktion der Radialkraftschwankung elektronisch gespeichert, zum Beispiel in einem digitalen Datenrecorder 7. Zur Verdeutlichung dessen, was das erfindungsgemäße Verfahren wie bewirkt, ist nachfolgend der Dateninhalt einer Meßspur geplottet:

Figur 2 zeigt einen der beiden mit zuvor beschriebener Vorrichtung gewonnener Radialkraftschwankungsschriebe eines PKW-Reifens vor erfindungsgemäßem Abtrag vom Wulst. Bei etwa 55° ist ein recht scharf gekrümmtes Maximum und bei etwa 178° ein weich gekrümmtes Minimum zu erkennen.

Die Nullachse der Radialkraftschwankung liegt entsprechend der zuvor erläuterten Datenverarbeitung so, daß innerhalb der Periodenlänge das Integral der Radialkraftschwankung gleich Null ist.

Figur 3 zeigt in gestrichelter Linie den vorgenannten Schrieb und in durchgezogener Linie die 1. Harmonische dazu. In dem Fachmann geläufiger Weise wurden die beiden Fourierkoeffizienten für die Sinus- bzw. Kosinusfunktion so bestimmt, daß das Integral über der Periodenlänge der Fehlerquadrate jeweils minimal wurde, die beiden sich so ergebenden Winkelfunktionen zu einer einzigen mit vektoriell bestimmter Phasenlage und Amplitude (=Wurzel aus der Summe der Einzelamplitudenquadrate) zusammengesetzt und diese Funktion schließlich geplottet.

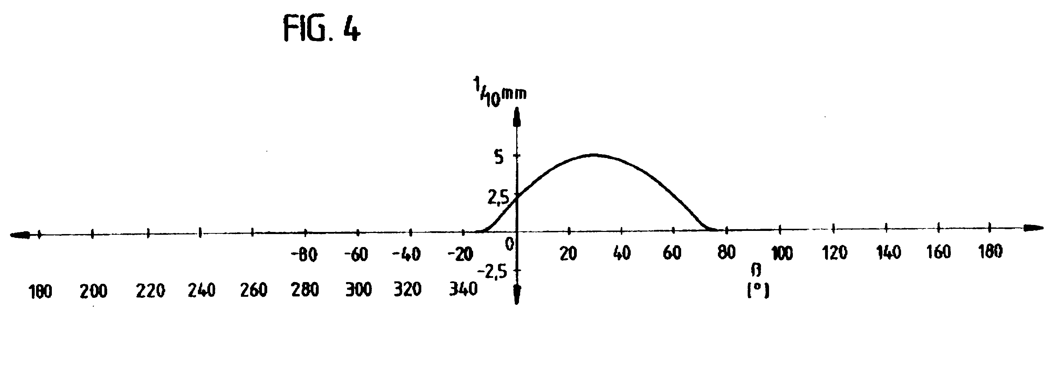

Figur 4 zeigt die Abtragsfunktion. Auf der senkrechten Achse sind Zehntelmillimeter aufgetragen. Als maximale Abtragstärke wurden hier 0,5 mm angenommen, ein Wert, der auf viele PKW-Reifen zutrifft. Weiterhin ist bei diesem Beispiel angenommen, daß 90° des Wulstumfanges zur Bearbeitung ungefaßt bleiben können. In einem einfachen Iterationsprogramm wurde nur die Phasenlage variiert, die prinzipielle Kurvenform also als unabänderlich angesehen. Letzteres ist praxisgerecht, weil die Reifen, die mit kleinerer maximaler Abtragstärke die minimale Radialkraftschwankung erzielen würden, schon ohne Abtrag gut genug sind und an den Reifen, die mit stärkerem Abtrag oder größerem Winkelbereich genauer zu korrigieren wären, der maximal zulässige Abtrag nicht überschritten werden darf, um den Wulstkern nicht zu gefährden und der Winkelbereich mangels Kernsteifigkeit nicht vergrößert werden kann. Der iterativ gefundene Winkelbereich geht von -16° bis +74°.

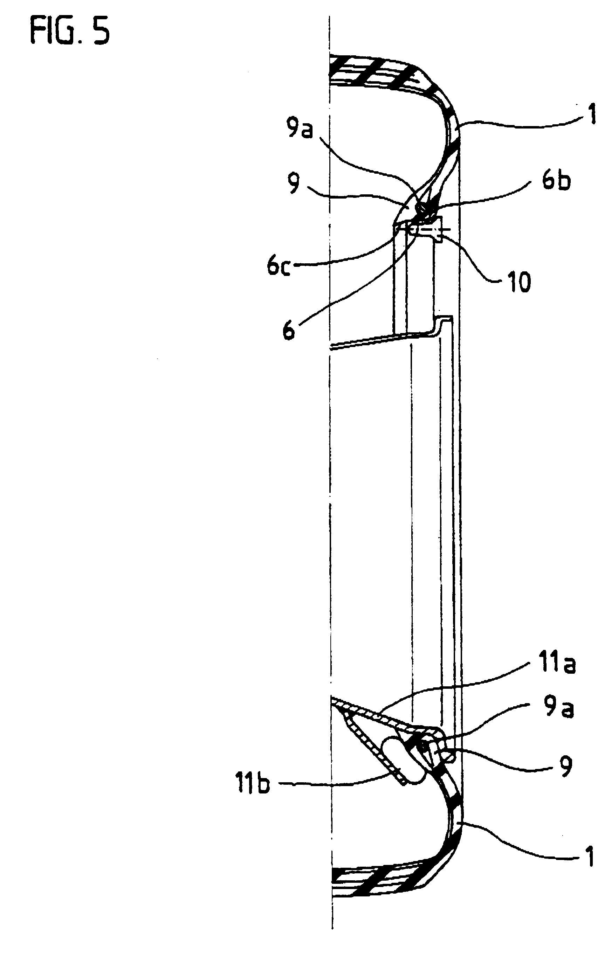

Figur 5 zeigt das für den Abtrag vorgesehene Werkzeug 10, einen kleinen trommelförmigen rotierenden Schleifstein, der durch eine Führung, hier ein nicht dargestelltes Kurvengetriebe, auf einer solchen Bahn bewegt wird, daß sich die zuvor dargestellte Abtragfunktion ergibt. Von der an der radial inneren Seite des Wulstes 9 des Reifens 1 befindlichen Sitzfläche 6 wird vorzugsweise - wie hier dargestellt - nur der axial äußere Bereich 6b, der in besonders dicker Linie dargestellt ist, bearbeitet, während die für die Dichtfunktion wesentliche Zehe 6c unbearbeitet bleibt.

In der unteren Bildhälfte ist die Einspannvorrichtung 11 schematisch dargestellt. Sie besteht aus einem Felgenfragment 11a und zwei als blähbare, ringförmige Schläuche 11b ausgeführte axial innere Klemmbacken, die den Wulst 9 gegen die Kehle des Felgenfragmentes 11a drückt.

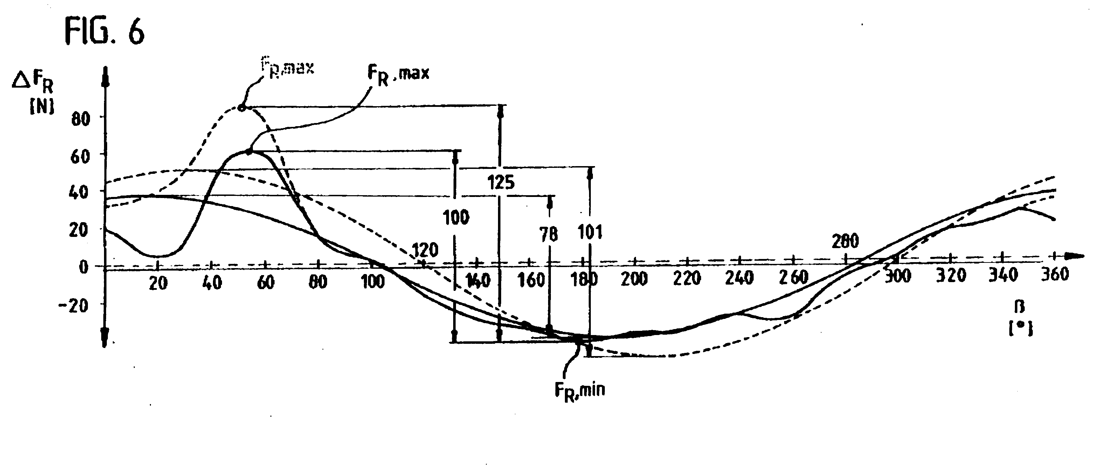

Figur 6 zeigt in gestrichelter Linie die ursprüngliche Radialkraftschwankung, die 1. Harmonische und die zugehörige Abszisse wie aus Figur 3 bekannt. In durchgezogener Linie ist die Radialkraftschwankung angegeben, die sich nach erfindungsgemäßem Abtrag einstellt; Abweichungen gibt es natürlich nur in dem Winkelbereich von -16° bzw. +344° bis 74°, im übrigen fallen beide Radialkraftschwankungsschriebe zusammen. Das Radialkraftminimum $F_{r,min}$ bleibt also unverändert, während das Radialkraftmaximum $F_{r,max}$, das ursprüngliche Maximum ist gestrichelt eingezeichnet, durch den Abtrag abgesenkt wurde. Die zugehörige Abszisse liegt 2,4 N - entsprechend der geringfügig gelockerten Wulstkennung - tiefer als die ursprüngliche und ist in durchgezogener Linie dargestellt.

Durch den erfindungsgemäßen Abtrag von der radial inneren Seite der Wülste bzw. des jeweiligen Wulstes ist die maximale Radialkraftschwankung von 125 N auf 100 N vermindert worden. Dadurch wurde die Amplitude der 1. Harmonischen der Radialkraftschwankung von 101 N auf 78 N vermindert. Dadurch hat dieser Reifen - ohne örtliche Verminderung der Profiltiefe - die 1a-Qualität erreicht.

Somit kann ohne Einbuße in der Mindestprofiltiefe der Neureifen der Laufstreifen eines erfindungsgemäßen PKW-Reifens um 0,5 mm dünner gehalten werden, was den Materialpreis erfindungsgemäßer Reifen senkt und gleichzeitig den Rollwiderstand und den Wärmeaufbau und damit die Polymerdegradation senkt, die Reifenqualität also steigert. Mit entsprechend anderen Zahlenwerten ergeben sich analoge Vorteile auch bei allen anderen Klassen von Fahrzeugreifen, insbesondere auch bei LKW- und Motorrad-Reifen. Man erreicht also bei verringerten Kosten eine höhere Produktqualität.

## Patentansprüche

1. Verfahren zur Rundlaufkorrektur von Luftreifen (1), vorzugsweise schlauchlosen mit radialer Karkasse (2) für PKW mit 5°-Felgen, wobei jeder Reifen (1) zunächst auf eine Meisterfelge (3) montiert wird, die abgesehen von ihrer besonders hohen Präzision den für den betreffenden Reifen vorgesehenen serienmäßigen Felgen zumindest in der Sitzflächengestalt entspricht, der Reifen (1) danach aufgeblasen wird auf einen Luftdruck in dem Intervall von -0,3 bar bis +0,2 bar um den vorgesehenen maximalen Betriebsluftdruck herum, wonach das im wesentlichen aus Meisterfelge (3) und zu korrigierendem Reifen (1) bestehende Rad (4) gegen eine Meßvorrichtung (5) gedrückt wird, zum Beispiel gegen eine trommelförmige Kraftmeßvorrichtung (5a), und zumindest als radiale Größe die Radialkraft $F_r$ oder der Reifenradius R gemessen und - vorzugsweise elektronisch - in Abhängigkeit vom Raddrehwinkel (β), der das volle Intervall von 0° bis 360° durchläuft, aufgezeichnet wird, sodann das Minimum $F_{r, min}$ beziehungsweise $R_{min}$ und das Maximum $F_{r, max}$ beziehungsweise $R_{max}$ bestimmt wird, danach die Differenz zwischen beiden Extrema, $F_{r, max} - F_{r,min}$ beziehungsweise $R_{max} - R_{min}$, die maximale Radialkraft- beziehungsweise Radiusschwankung bestimmt wird, die sodann mit dem zugelassenen Toleranzwert verglichen wird und die Reifen (1) deren maximale Schwankung über dem zugelassenen Toleranzwert liegen einer Korrektur im Wulstbereich unterzogen werden, **dadurch gekennzeichnet,** daß an den Stellen, wo

die örtliche Radialkraft ($F_r$) beziehungsweise der örtliche Reifenradius (R) größer als Minimum ($F_{r, min}$ beziehungsweise $R_{min}$) plus der maximalen Toleranz ist, zumindest soviel von der nach radial innen weisenden Sitzfläche (6) des Reifenwulstes (9) abgetragen wird, daß danach die verbleibenden Schwankungen innerhalb des Toleranzfeldes liegen.

2. Verfahren nach Anspruch 1 dadurch gekennzeichnet, daß das Abtragen durch Schleifen erfolgt.

3. Verfahren nach Anspruch 1 dadurch gekennzeichnet, daß das Abtragen durch Laserstrahl erfolgt.

4. Verfahren nach einem der vorangehenden Ansprüche dadurch gekennzeichnet, daß nicht auf dem gesamten Wulstumfang sondern nur in einem Wulstumfangsbereich etwas abgetragen wird.

5. Verfahren nach Anspruch 4 dadurch gekennzeichnet, daß nach der Reifenvermessung jeder zu korrigierende Wulst in einer Vorrichtung (11) eingespannt wird, die zwischen 200° und 310° des jeweiligen Wulstumfanges nach Art einer Felge (11a) aufnimmt und den Umfangsbereich des jeweiligen Wulstes, von dem zur Rundlaufkorrektur etwas abzutragen ist, freiläßt.

6. Verfahren nach einem der vorangehenden Ansprüche, vorzugsweise nach Anspruch 5, dadurch gekennzeichnet, daß aus der gemessenen Radiusschwankung oder Radialkraftschwankung insbesondere die erste Harmonische - vorzugsweise durch Fourier-Analyse - herausgefiltert wird und in den Grenzen des bearbeitbaren Wulstumfangsbereiches und der zulässigen Abtragstärke der Abtrag so bestimmt wird, daß die Amplitude der ersten Harmonischen so weit wie möglich gesenkt wird.

7. Verfahren nach zumindest einem der vorangehenden Ansprüche dadurch gekennzeichnet, daß die Radialkraft $F_r$ mit ihrer Schwankung gemessen wird.

8. Verfahren nach einem der vorangehenden Ansprüche, insbesondere nach Anspruch 7, dadurch gekennzeichnet, daß außerdem die Axialkraft $F_a$ mit ihrer Schwankung gemessen wird.

9. Verfahren nach einem der vorangehenden Ansprüche 1 bis 7, insbesondere nach Anspruch 7, dadurch gekennzeichnet, daß die Radialkraft gleichzeitig in zwei nebeneinander liegenden Spuren gemessen wird und die Meßergebnisse der linken Spur den Abtrag am linken Wulst und die Meßergebnisse der rechten Spur den Abtrag am rechten Wulst beeinflussen.

10. Verfahren nach zumindest einem der Ansprüche 1 bis 6 dadurch gekennzeichnet, daß der Reifenradius R mit seiner Schwankung gemessen wird.

11. Verfahren nach Anspruch 10 dadurch gekennzeichnet, daß der Reifenradius R nicht im Zenit (Z) sondern in axialem Abstand davon zu beiden des Zenites (Z), vorzugsweise etwa über den Wulstkernen (9a), gemessen wird und die Meßergebnisse der linken Spur den Abtrag am linken Wulst (9l) und die Meßergebnisse der rechten Spur den Abtrag am rechten Wulst (9r) beeinflussen.

12. Einspannende Vorrichtung (11) zur Durchführung eines Verfahrens nach Anspruch 4 **dadurch gekennzeichnet,** daß sie im Querschnitt felgenähnlich gestaltet ist, jedoch einen Teil des Umfanges ausspart, innerhalb dessen das abtragende Werkzeug (10) arbeitet.

13. Vorrichtung (11) nach Anspruch 12 dadurch gekennzeichnet, daß der ausgesparte Umfangsbereich eine Erstreckung von 50° bis 160°, vorzugsweise etwa 90°, aufweist.

14. Vorrichtung (11) nach Anspruch 12 oder 13 dadurch gekennzeichnet, daß sie überdies über innere Klemmbacken (11b) verfügt, die zusammen mit den felgenähnlichen äußeren Klemmbacken (11a) den zu bearbeitenden Wulst (9) unverrückbar festklemmt.

15. Vorrichtung (11) nach Anspruch 14 dadurch gekennzeichnet, daß die inneren Klemmbacken als blähbarer Schlauch (11b) ausgeführt sind.

16. Vorrichtung (11) nach einem der vorangehenden Ansprüche 12 bis 15 dadurch gekennzeichnet, daß sie in einen linken und einen rechten Teil geteilt ist, wobei beide Teile in beliebiger Verdrehung zueinander feststellbar sind, sodaß in einer einzigen Reifenaufspannung an dem einen Wulst (9l) ein anderer Winkelbereich zur Bearbeitung freibleiben kann als an dem anderen Wulst (9r).

**Claims**

1. Method of correcting the concentricity of pneumatic tyres (1), preferably tubeless tyres, having a radial carcase (2) for passenger vehicles with 5° rims, each tyre (1) initially being mounted on a master rim (3) which, apart from its particularly high degree of precision, corresponds to the standard rims intended for the pertinent tyre, at least in respect of the configuration of the seating face, the tyre (1) is then inflated to an air pressure in the range of between -0.3 bar and +0.2 bar around the envisaged maximum operational air pressure, whereupon the wheel (4), which substantially comprises master rim (3) and tyre (1) to be corrected, is urged towards a measuring device (5), for example towards a drum-shaped force-measuring device (5a), and at least the radial force $F_r$ or the tyre radius R is measured as the radial parameter and indicated - preferably electronically - in dependence on the angle of wheel rotation ($\beta$), which traverses the full range between 0° and 360°, then the minimum $F_{r, min}$, or respectively $R_{min}$, and the maximum $F_{r, max}$, or respectively $R_{max}$, is determined, then the difference between the two extremes, $F_{r, max} - F_{r, min}$, or respectively $R_{max} - R_{min}$, the maximum radial force or respectively radius variation is determined, which is then compared with the permitted tolerance value, and the tyres (1), which have a maximum variation above the permitted tolerance value, are subjected to a correction in the bead region, characterised in that, at the locations where the local radial force ($F_r$), or respectively the local tyre radius (R), is greater than the minimum ($F_{r, min}$ or respectively $R_{min}$) plus the maximum tolerance, at least so much of the radially inwardly orientated seating face (6) of the tyre bead (9) is abraded that the remaining variations then lie within the tolerance range.

2. Method according to claim 1, characterised in that the abrading is effected by grinding.

3. Method according to claim 1, characterised in that the abrading is effected by laser beam.

4. Method according to one of the preceding claims, characterised in that abrading is not effected over the entire bead circumference, but some abrading is effected in just one region of the bead circumference.

5. Method according to claim 4, characterised in that, after the measurement of the tyre, each bead to be corrected is clamped in position in an apparatus (11), which accommodates between 200° and 310° of the particular bead circumference in the form of a rim (IIa) and leaves free the circumferential region of the particular bead, from which some abrading is to be effected for the correction of the concentricity.

6. Method according to one of the preceding claims, preferably according to claim 5, characterised in that the first harmonic is especially filtered-out from the measured radius variation or radial force variation - preferably by Fourier analysis - and the abrading is so determined, within the limits of the processable bead circumferential region and the permissible degree of abrading, that the amplitude of the first harmonic is lowered as far as possible.

7. Method according to at least one of the preceding claims, characterised in that the radial force $F_r$ is measured with its variation.

8. Method according to one of the preceding claims, more especially according to claim 7, characterised in that the axial force $F_a$ is also measured with its variation.

9. Method according to one of the preceding claims 1 to 7, more especially according to claim 7, characterised in that the radial force is simultaneously measured in two adjacently disposed tracks, and the results of measuring the left-hand track influence the abrading at the left-hand bead, and the results of measuring the right-hand track influence the abrading at the right-hand bead.

10. Method according to at least one of claims 1 to 6, characterised in that the tyre radius R is measured with its variation.

11. Method according to claim 10, characterised in that the tyre radius R is measured not at the crown (Z) but at an axial spacing therefrom at both sides of the crown (Z), preferably substantially above the bead cores (9a), and the results of measuring the left-hand track influence the abrading at the left-hand bead (9l), and the results of measuring the right-hand track influence the abrading at the right-hand bead (9r).

12. Clamping apparatus (11) for accomplishing a method according to claim 4, characterised in that it has a rim-like cross-sectional configuration, but a portion of the circumference, within which the abrading tool (10) operates, is recessed.

13. Apparatus (11) according to claim 12, characterised in that the recessed circumferential region has an extension of between 50° and 160°, preferably substantially 90°.

14. Apparatus (11) according to claim 12 or 13, characterised in that it also has internal clamping jaws (11b) which, together with the rim-like external clamping jaws (11a), irreversibly securely clamp the bead (9) to be processed.

15. Apparatus (11) according to claim 14, characterised in that the internal clamping jaws are configured as an inflatable tube (11b).

16. Apparatus (11) according to one of the preceding claims 12 to 15, characterised in that it is divided into a left-hand part and a right-hand part, both parts being securable in any desirable rotation relative to each other so that an angular region at one bead (9l), which differs from that at the other bead (9r), can remain free for processing in a single tyre clamping operation.

## Revendications

1. Procédé pour corriger l'excentricité de pneumatiques (1), de préférence de pneumatiques sans chambre à air, à carcasse radiale (2) pour des voitures de tourisme comportant des jantes disposées à 5°, selon lequel on monte tout d'abord chaque pneumatique (1) sur une jante de référence (3), qui correspond, indépendamment de sa précision particulièrement élevée, aux jantes de série prévues pour le pneumatique considéré, au moins en ce qui concerne la forme de la surface d'appui, on gonfle ensuite le pneumatique (1) à une pression d'air dans l'intervalle de -0,3 bar à +0,2 bar entourant la pression d'air de service maximale prévue, à la suite de quoi on repousse la roue (4) constituée essentiellement par la jante de référence (3) et le pneumatique à corriger (1), contre un dispositif de mesure, par exemple contre un dispositif de mesure dynamométrique en forme de tambour (5a), et on mesure au moins en tant que grandeur radiale la force radiale $F_r$ ou le rayon Ry du pneumatique et on l'enregistre - de préférence électroniquement - en fonction de l'angle de rotation de roue ($\beta$), qui parcourt l'intervalle complet de 0° à 360°, puis on détermine le minimum $F_{r,min}$ ou $R_{min}$ et le maximum $F_{r,max}$ ou $R_{max}$, et on détermine ensuite la différence entre les deux extrema $F_{r,max}$-$F_{r,min}$ ou $R_{max}$-$R_{min}$, c'est-à-dire la variation maximale de la force radiale ou du rayon, que l'on compare alors à la valeur de tolérance autorisée, et on soumet les pneumatiques (1), dont la variation maximale dépasse la valeur de tolérance admissible, à une correction au niveau du talon, caractérisé en ce qu'aux emplacements où la force radiale locale ($F_r$) où le rayon local (R) du pneumatique est supérieur(e) à la valeur minimale ($R_{r,min}$ ou $R_{min}$) plus la tolérance maximale, on enlève au moins suffisamment de matière de la surface d'appui (6), qui est tournée radialement vers l'intérieur, du talon (9) du pneumatique pour qu'ensuite les variations subsistantes restent situées dans la plage de tolérances.

2. Procédé selon la revendication 1, caractérisé en ce que l'enlèvement de matière s'effectue par meulage.

3. Procédé selon la revendication 1, caractérisé en ce que l'enlèvement de matière s'effectue à l'aide d'un faisceau laser.

4. Procédé selon l'une des revendications précédentes, caractérisé en ce qu'on enlève de la matière par exemple non pas sur l'ensemble de la périphérie du talon, mais uniquement dans une zone de la périphérie du talon.

5. Procédé selon la revendication 4, caractérisé en ce qu'après avoir mesuré le pneumatique, on serre chaque talon à corriger dans un dispositif (11), qui loge la périphérie respective du talon à la manière d'une jante (11a), sur une étendue comprise entre 200° et 310°, et laisse dégagée la partie périphérique du talon respectif, dans laquelle il faut effectuer un enlèvement de matière pour réaliser la correction d'excentricité.

6. Procédé selon l'une des revendications précédentes, de préférence selon la revendication 5, caractérisé en ce qu'on élimine par filtrage notamment le premier harmonique - de préférence au moyen d'une analyse de Fourier -, de la variation mesurée du rayon ou de la variation mesurée de la force radiale, et qu'on détermine l'enlèvement de matière, dans les limites de la partie périphérique pouvant être traitée du talon et de l'épaisseur autorisée d'enlèvement de matière, de manière que l'amplitude du premier harmonique soit réduite aussi fortement que possible.

7. Procédé selon au moins l'une des revendications précédentes, caractérisé en ce qu'on mesure la force radiale $F_r$ ainsi que sa variation.

8. Procédé selon l'une des revendications précédentes, notamment selon la revendication 7, caractérisé en ce qu'on mesure en outre la force axiale $F_a$ ainsi que sa variation.

9. Procédé selon l'une des revendications précédentes 1 à 7, notamment selon la revendication 7, caractérisé en ce qu'on mesure la force radiale simultanément sur deux pistes disposées côte-à-côte et que les résultats de mesure de la piste de gauche influent sur l'enlèvement de matière au niveau du talon de gauche et que les résultats de mesure de la piste de droite influent sur l'enlèvement de matière au niveau du talon de droite.

10. Procédé selon au moins l'une des revendications 1 à 6, caractérisé en ce qu'on mesure le rayon R du pneumatique avec sa variation.

11. Procédé selon la revendication 10, caractérisé en ce qu'on mesure le rayon R du pneumatique non seulement au zénith (Z), mais à une certaine distance axiale du zénith (Z), des deux côtés de ce dernier, de préférence par exemple au-dessus les tringles (9a) du talon, et que les résultats de mesure de la piste de gauche influent sur l'enlèvement de matière au niveau du talon de gauche (9l) et que les résultats de mesure de la piste de droite influent sur l'enlèvement de matière au niveau du talon de droite (9r).

12. Dispositif de serrage (11) pour la mise en oeuvre d'un procédé selon la revendication 4, caractérisé en ce qu'il est agencé avec la forme d'une jante en coupe transversale, mais laisse dégagée une partie de la périphérie, à l'intérieur de laquelle travaille l'outil (10) d'enlèvement de matière.

13. Dispositif (11) selon la revendication 12, caractérisé en ce que la zone périphérique dégagée possède une étendue de 50° à 160°, et de préférence d'environ 90°.

14. Dispositif (11) selon la revendication 12 ou 13, caractérisé en ce qu'il comporte en outre des mâchoires intérieures de serrage (11b), qui, conjointement avec les mâchoires extérieures de serrage (11a) analogues à des jantes, serrent fermement d'une manière imperdable le talon (9) à traiter.

15. Dispositif (1) selon la revendication 14, caractérisé en ce que les mâchoires intérieures de serrage sont agencées sous la forme d'un tuyau gonflable (11b).

16. Dispositif (11) selon l'une des revendications précédentes 12 à 15, caractérisé en ce qu'il est subdivisé en une partie gauche et une partie droite, ces deux parties pouvant être bloquées fermement contre toute rotation réciproque de sorte que lors d'une seule opération de serrage du pneumatique, au niveau d'un talon (9l) une zone angulaire pour le traitement, différente de celle située au niveau de l'autre talon (9r), peut rester libre.

FIG. 1

$$\approx \frac{F_R}{2}, R, F_a$$

$$\approx \frac{F_R}{2}, R, F_a$$

FIG. 2

EP 0 654 658 B1

FIG. 3

EP 0 654 658 B1

180 200 220 240 260 280 300 320 340

180 160 140 120 100 80 60 40 20

(°)
(f)

340 320 300 280 260 240 220 200 180

-2,5
0

-20 -40 -60 -80

2,5

5

$^{1}/_{10}$mm

FIG. 4

FIG. 5

FIG. 6